# FASCICULE DE BREVET EUROPEEN

(11) **EP 0 942 623 B1**
(45) Date de publication et mention de la délivrance du brevet: **20.04.2005**
(21) Numéro de dépôt: 99400347.3
(22) Date de dépôt: 12.02.1999
(51) Int. Cl.: H04Q 11/04

(54) **Procédé de minimisation des effets perturbateurs de couplage entre deux dispositifs téléphoniques voisins d'émission/réception**
Verfahren zur Minimierung der Kopplungsstörungseffekte zwischen zwei Sende/Empfangsfernsprecheinrichtungen
Process of minimization of coupling perturbation effects between two neighbouring transmission/reception telephonic devices

(30) Priorité: 17.02.1998 FR 9801913
(43) Date de publication de la demande: 15.09.1999
(73) Titulaire: STMicroelectronics S.A., 92120 Montrouge (FR)
(72) Inventeur: Druilhe, François, 38420 Le Versoud (FR)
(74) Mandataire: Casalonga, Axel

(56) Documents cités:
- EP-A- 0 528 738
- SALLAERTS D ET AL: "SINGLE CHIP U INTERFACE CIRCUIT AND ITS FIELD APPLICATION" ELECTRICAL COMMUNICATION, vol. 64, no. 1, 1 juillet 1990 (1990-07-01), pages 95-100, XP000136341
- SUGIMOTO S ET AL: "DESIGN OF 2B1Q TRANSCEIVER FOR ISDN SUBSCRIBER LOOPS" IEEE INTERNATIONAL CONFERENCE ON COMMUNICATIONS (ICC '89), vol. 1, 11 - 14 juin 1989, pages 228-232, XP000075463 BOSTON

## Description

L'invention concerne la téléphonie, et plus particulièrement la réduction du couplage entre deux circuits voisins d'interface U respectivement connectés à deux lignes téléphoniques d'abonnés véhiculant, sous forme analogique, des informations numériques préalablement transcodées en bande de base.

L'homme du métier sait qu'un transcodage en bande de base comporte classiquement deux étapes, à savoir une étape de codage proprement dit qui associe à une séquence d'informations numériques successives, un symbole prédéterminé, puis une étape dite de mise en forme, qui associe à chaque symbole, après conversion numérique analogique, une impulsion analogique élémentaire de durée prédéterminée.

L'ensemble de ces impulsions forment un signal analogique qui est délivré au transformateur de ligne disposé à l'extrémité de la ligne d'abonné.

Parmi les codes utilisés, on peut en citer un premier type connu par l'homme du métier sous la dénomination 2B1Q et défini dans les normes ETSI ETR 080 (norme européenne) et ANSI T1.601 (norme américaine). On peut également citer un deuxième type de codage connu par l'homme du métier, notamment sous la dénomination 4B3T et défini plus précisément dans les normes ETSI ETR 080 et FTZ 1 TR 220 (norme allemande).

L'invention s'applique avantageusement mais non limitativement à la transmission d'informations numériques dans le cadre d'un réseau numérique à caractère universel, à savoir le réseau numérique à intégration de services (RNIS ou ISDN en langue anglaise) et spécifié également dans les normes ETSI ETR 080 (norme européenne) et ANSI T1.601 (norme américaine).

Brièvement, les trois caractéristiques principales du RNIS sont les suivantes :
- la possibilité offerte, à partir d'un même accès, de disposer simultanément de services téléphoniques, télématiques et même de vidéocommunications,
- une transmission numérique intégrale d'abonné à abonné avec une connexité numérique dans les différents centres de commutation,
- une signalisation uniquement en mode message entre les différentes entités fonctionnelles (terminaux, commutateurs, serveurs, ...).

L'architecture du réseau local de raccordement des usagers au réseau RNIS comporte essentiellement, du côté abonné, un terminal numérique de réseau (TNR) auxquels sont raccordés les différents terminaux de l'usager et, du côté commutateur, un terminal de ligne (TL) qui assure sensiblement les mêmes fonctions que le terminal TNR. Entre le terminal TNR et le terminal TL, se situe la ligne d'abonné (interface U) constituée d'une paire de câbles en cuivre dont les caractéristiques (longueur maximale, débit utile, taux d'erreur, ...) sont normalisées.

Ainsi, le débit utile est de 144 kbits/s constitué de deux canaux B à 64 kbits/s pour le transport des informations utiles et d'un canal D de 16 kbits/s pour le transport des bits de contrôle.

La ligne d'abonné permet donc d'utiliser le RNIS dit "bande étroite" dans lequel l'accès au débit de base, encore appelé 2B+D, est limité à 144 kbits/s. L'utilisation des codes tels que le code 4B3T ou le code 2B1Q, permet de réduire la bande spectrale utilisée pour la transmission.

Le circuit d'interface U est un circuit émetteur/récepteur. On trouve ce circuit d'interface U au niveau du terminal TNR et également au niveau du terminal TL. Il permet la transmission bidirectionnelle des données numériques sur une seule paire téléphonique. La transmission se fait en "full-duplex", c'est-à-dire que les données émises et les données à recevoir se trouvent simultanément sur la ligne téléphonique. A la réception, ces données doivent donc être découplées par des moyens dits d'annulation d'écho, qui soustraient au signal reçu le signal que l'on vient juste d'émettre. De tels circuits sont connus par exemple du document Sallaerto and al. :"Single Chip U Interface Circuit and its Field Application" Electrical Communication, vol. 64, n° 1, p. 95-100.

Actuellement, on peut, dans un terminal de ligne TL, disposer une carte-mère unique comportant jusqu'à seize circuits d'interface U identiques, associés donc à seize transformateurs de ligne. Si ces transformateurs de lignes sont trop proches les uns des autres, il se produit, lorsqu'un émetteur d'un circuit d'interface U transmet tandis qu'un récepteur d'un autre circuit d'interface U reçoit, des couplages parasites d'un circuit d'interface U à l'autre ce qui a pour conséquence de créer des perturbations dans le signal reçu sur la voie de réception d'un circuit d'interface U, perturbations provoquées par les voies d'émission des circuits d'interface U immédiatement adjacents. Une solution consiste alors à éloigner physiquement les transformateurs les uns des autres, ce qui limite en conséquence le nombre de lignes d'abonnés pouvant être traitées au niveau d'un terminal de ligne.

Avec l'évolution de la technologie, des nouveaux circuits d'interface U peuvent intégrer jusqu'à quatre voies de transmission identiques. Dans ce cas, le couplage parasite entre les voies est provoqué par la présence d'alimentation commune ainsi que d'autres éléments communs. Une solution pour limiter ce couplage consiste alors à concevoir de tels circuits d'interface U avec des alimentations séparées et un nombre minimum, voire nul, de circuit commun, ce qui a pour conséquence une augmentation de la surface de ces circuits.

L'invention vise à apporter une solution radicalement différente à ce problème de la minimisation des effets perturbateurs de couplage entre deux dispositifs voisins d'émission/réception (circuit d'interface U) connectés à deux lignes téléphoniques d'abonnés.

Un but de l'invention est d'estimer l'effet de couplage entre deux circuits d'interface U voisins, et de débarrasser le signal reçu par un circuit d'interface U, du signal de couplage ainsi estimé.

L'invention propose donc un procédé de minimisation des effets perturbateurs de couplage entre deux dispositifs voisins d'émission/réception (par exemple des circuits d'interface U) respectivement connectés à deux lignes téléphoniques d'abonné véhiculant respectivement de façon temporellement synchrone des flots de symboles choisis parmi S symbole possible de transmission (S étant par exemple égal à 4 dans le cas d'un code 2B1Q), procédé dans lequel on retarde le signal numérique reçu sur la voie de réception d'un premier dispositif d'un retard égal à p fois la période de transmission des symboles (par exemple au moyen d'une mémoire FIFO et disposée sur la voie de réception de ce premier dispositif), et on débarrasse ce signal retardé d'un signal d'écho, estimé à partir du signal transmis sur la voie d'émission de ce premier dispositif, d'au moins un filtre adaptatif à réponse impulsionnelle finie et d'un signal d'erreur.

Selon une caractéristique générale du procédé selon l'invention, on estime un signal de couplage entre la voie d'émission du deuxième dispositif et la voie de réception du premier dispositif à partir de sommes successives de n coefficients de couplage d'un filtre adaptatif d'estimation de couplage, ces n coefficients de couplage étant déterminés en fonction du signal transmis sur la voie d'émission du deuxième dispositif, et on débarrasse également le signal retardé (reçu sur la voie de réception en sortie de la FIFO) de ce signal de couplage estimé. On choisit le nombre n de telle sorte qu'il soit supérieur ou égal à p et inférieur ou égal à un huitième du nombre des coefficients du filtre d'estimation d'écho. Il en effet été observé qu'un nombre n inférieur à p ne permettait pas une estimation correcte du signal de couplage entre les deux circuits d'interface U voisins. Un nombre n supérieur à un huitième du nombre des coefficients du filtre d'estimation d'écho peut conduire finalement à adjoindre au signal reçu des perturbations de bruit supérieures à celles réellement occasionnées par le couplage avec le circuit d'interface U voisin.

Généralement, on peut estimer l'écho à partir soit d'un seul filtre à réponse impulsionnelle finie, ayant par exemple 96 coefficients, soit à l'aide de la combinaison d'un filtre à réponse impulsionnelle finie, ayant par exemple 64 coefficients, et d'un filtre à réponse impulsionnelle infinie, à deux coefficients, ayant pour but d'approximer la partie finale de la réponse impulsionnelle de la perturbation à une exponentielle décroissante. Par ailleurs, la taille de la FIFO disposée sur la voie de la réception du circuit d'interface U est typiquement égale à quatre symboles. Il a alors été observé qu'une valeur de n égale à huit permettait d'obtenir une bonne estimation du couplage entre deux circuits d'interface U voisins.

Par ailleurs, l'estimation du signal de couplage à partir des sommes successives de n coefficients de couplage, qui sont eux-même déterminés en fonction des valeurs successives de n symboles transmis par le canal perturbateur, s'apparente à une convolution entre les coefficients de couplage et le signal perturbateur (en se distinguant toutefois d'un produit de convolution classique dans lequel on fait intervenir les produits élémentaires des coefficients avec les valeurs des échantillons du signal perturbateur), et permet d'estimer correctement le signal de couplage même lorsque les perturbations ne varient pas linéairement avec l'amplitude des différents symboles émis sur le canal perturbateur.

A cet égard, bien qu'au sens de la théorie du traitement du signal, l'invention ne prévoit pas un "filtrage" proprement dit pour l'estimation du couplage car il n'y a pas de multiplication par le signal perturbateur, on utilise cependant ici à des fins de simplification l'expression "filtre d'estimation de couplage" pour désigner les moyens permettant l'estimation dudit couplage.

On met par ailleurs à jour les coefficients du filtre d'estimation de couplage à partir du signal d'erreur et d'un signal temporellement retardé par rapport au signal transmis sur la voie d'émission du deuxième dispositif, d'un retard ayant une valeur prédéfinie choisie de façon à assurer la convergence de l'estimation du signal de couplage. La valeur choisie du retard dépend notamment des différents filtres disposés entre l'endroit de soustraction du signal de couplage et l'endroit d'élaboration du signal d'erreur dans la voie de réception. Ce retard, qui est typiquement un multiple de la période de transmission des symboles, peut être défini sensiblement a priori compte tenu de la structure de la voie de réception. Sa valeur peut être affinée par simulation de façon à assurer la convergence de l'estimation, c'est-à-dire à permettre d'obtenir une valeur sensiblement nulle pour le signal d'erreur.

Selon un mode de mise en oeuvre du procédé, pour un flot continu de symboles transmis sur la voie d'émission du deuxième dispositif, l'estimation du signal de couplage par filtrage adaptatif comporte :
- la détermination, pour chaque symbole transmis, d'un coefficient de couplage, en choisissant, en fonction de la valeur du symbole transmis, l'un des coefficients de couplage d'un groupe, dit groupe de couplage, associé à ce symbole et composé de S coefficients de couplage respectivement associés aux S valeurs possibles des symboles de transmission,
- l'estimation dudit signal de couplage par des sommes successives de n coefficients de couplage respectivement associés à n symboles consécutifs dudit flot et respectivement choisis parmi n groupes de couplage.

Par ailleurs, la mise à jour des coefficients de couplage comprend la mise à jour du groupe de couplage associé au symbole de rang i en mettant à jour la valeur du coefficient de couplage de ce groupe associé à la valeur du symbole de rang i-k, cette mise à jour s'effectuant à partir de la valeur précédente de ce symbole de rang i-k et de la valeur du signal d'erreur ; k est une valeur prédéfinie choisie de façon à assurer la convergence de l'estimation du signal de couplage.

En l'absence de symbole transmis sur la voie d'émission du deuxième dispositif (canal perturbateur), on élabore un symbole spécifique représentatif d'une absence de symbole transmis et on affecte à ce symbole spécifique un coefficient de couplage nul. Ainsi pour un flot discontinu de symboles transmis par le deuxième dispositif, on estime le signal de couplage par des sommes successives de n coefficients de couplage comportant les coefficients de couplage respectivement associés aux symboles dudit flot et respectivement choisis parmi les groupes correspondant de couplage, ainsi que les coefficients de couplage nuls correspondant aux absences de transmission. On s'abstient alors avantageusement de mettre à jour les n groupes de couplage à chaque présence d'un symbole spécifique et pendant une durée égale à n fois la période de transmission des symboles.

En d'autres termes, si le traitement d'estimation s'effectue au sein de n étages de traitements successifs, on s'abstient de mettre à jour les groupes de couplage à chaque présence d'un symbole spécifique à l'entrée du premier étage et tant que ce symbole spécifique ne s'est pas totalement propagé dans les étages jusqu'à sortir du dernier étage. Pendant ce temps on somme des valeurs nulles pour l'estimation du signal de couplage. Et ceci se répète pendant toute période d'absence de transmission sur le canal perturbateur.

Selon un mode de mise en oeuvre de l'invention, on estime le signal de couplage en calculant, à la fréquence des transmissions des symboles, des échantillons de signal de couplage par n traitements élémentaires successifs effectués au rythme de la fréquence de transmission des symboles. Dans chaque traitement élémentaire, on reçoit:
- un symbole du flot de symboles transmis par la voie d'émission du dispositif voisin ou un symbole spécifique (le symbole reçu par cet étage de traitement élémentaire provenant soit directement du canal perturbateur s'il s'agit du premier traitement élémentaire, soit du traitement élémentaire précédent),
- un symbole temporellement retardé par rapport audit symbole ou audit symbole spécifique,
- et une valeur échantillonnée du signal d'erreur.

On détermine le coefficient de couplage associé au symbole ou au symbole spécifique reçu que l'on somme avec le résultat de la sommation homologue effectué au traitement précédent (étage précédent).

Lorsque la mise à jour des coefficients de couplage est autorisée, on met à jour le coefficient associé au symbole retardé reçu, en sommant la valeur précédente de ce coefficient de couplage avec la valeur échantillonnée du signal d'erreur.

Ainsi, dans ce mode de mise en oeuvre, contrairement à une adaptation classique des coefficients de couplage par un algorithme dit des moindres carrés, on ne tient pas compte du carré de la valeur de chaque symbole perturbateur pour moduler la valeur échantillonnée du signal d'erreur. Il a en effet été observé, notamment en raison du fait que les perturbations de couplage engendrées par le canal perturbateur étaient du second ordre, que la non prise en compte de ce facteur modulant, c'est-à-dire la simple sommation de la valeur échantillonnée du signal d'erreur, permettait de simplifier la mise en oeuvre du procédé selon l'invention tout en permettant une bonne estimation du signal de couplage.

L'endroit de soustraction du signal de couplage dans la voie de réception, peut varier. Ainsi, on pourrait par exemple d'abord débarrasser le signal retardé issu de la FIFO du signal d'écho avant de le débarrasser du signal de couplage. Cependant, il est plus avantageux de débarrasser d'abord le signal retardé du signal de couplage puis de débarrasser le signal résultant du signal d'écho estimé. Ceci offre notamment l'avantage de pouvoir réaliser un composant indépendant d'estimation de couplage qui peut être alors aisément connecté sur une carte classique d'interface U déjà équipée d'un bloc d'estimation d'écho.

L'invention a également pour objet un dispositif d'émission/réception d'un signal téléphonique, comprenant une voie d'émission et une voie de réception connectées à une ligne téléphonique d'abonné, pour émettre et recevoir des signaux de transmission et de réception comportant des flots de symboles numériques choisis parmi S symboles possibles de transmission,
- une mémoire disposée sur la voie de réception et apte à stocker temporairement p symboles,
- un bloc d'estimation d'écho connecté entre la voie d'émission et de réception et comportant un filtre adaptatif à réponse impulsionnelle finie, recevant le signal de transmission ainsi qu'un signal d'erreur élaboré sur la voie de réception,
- et des premiers moyens de soustraction possédant une première entrée reliée à la sortie de la mémoire et une deuxième entrée reliée à la sortie du bloc d'estimation d'écho.

Selon une caractéristique générale de l'invention, ce dispositif comprend en outre un bloc d'estimation de couplage comportant :
- des moyens de filtrage adaptatifs à n coefficients de couplage, n étant supérieur ou égal à p et inférieur ou égal à un huitième du nombre des coefficients du filtre d'estimation d'écho, et des moyens d'estimation recevant un signal de transmission annexe transmis sur la voie d'émission (canal perturbateur) d'un dispositif voisin d'émission/réception de façon temporellement synchrone audit signal de transmission, ces moyens d'estimation étant aptes à déterminer successivement les n coefficients de couplage en fonction du signal de transmission annexe et à les sommer successivement de façon à délivrer un signal de couplage représentatif du couplage estimé entre ladite voie de réception et la voie d'émission du dispositif voisin,
- des moyens de retard aptes à délivrer un signal de transmission temporellement retardé par rapport au signal de transmission annexe, d'un retard ayant une valeur prédéfinie choisie de façon à assurer la convergence des moyens de filtrage,
- et des moyens de mise à jour aptes à mettre à jour les coefficients de couplage des moyens de filtrage à partir de ce signal de transmission temporellement retardé et du signal d'erreur.

Le dispositif d'émission/réception comprend également des deuxièmes moyens de soustraction possédant une première entrée reliée à la sortie de la mémoire et une deuxième entrée reliée à la sortie des moyens de filtrage, ce qui permet de débarrasser le signal issu de la mémoire, du signal de couplage estimé.

Matériellement, les différents moyens du bloc d'estimation de couplage peuvent être réalisés de façon logicielle au sein par exemple d'un processeur de traitement du signal. Ils peuvent également être réalisés de façon câblée au sein d'un circuit intégré, notamment pour des fréquences élevées.

Selon un mode de réalisation du dispositif selon l'invention, le bloc d'estimation de couplage comporte une entrée principale pour recevoir le flot de symboles du signal de transmission annexe (canal perturbateur), une entrée auxiliaire pour recevoir le signal d'erreur, une sortie pour délivrer le signal de couplage estimé.

Les moyens de filtrage, les moyens d'estimation et les moyens de mise à jour sont répartis sur n étages de traitement connectés en série entre ladite entrée principale et la sortie, ces n étages de traitement étant tous reliés reliés à ladite entrée auxiliaire.

L'étage de rang i comporte une première entrée de symbole pour recevoir un symbole courant du signal de transmission annexe, une deuxième entrée de symbole pour recevoir un symbole temporellement retardé par rapport au symbole courant et délivré par les moyens de retard, une entrée de mise à jour pour recevoir le signal d'erreur, une sortie de symbole, une bascule connectée entre la première entrée de symbole et la sortie de symbole pour stocker temporairement le symbole courant, et une sortie secondaire.

L'étage de rang i comporte par ailleurs S registres pour stocker respectivement S coefficients de couplage, ainsi que des premiers moyens de sélection pour sélectionner en fonction de la valeur du symbole présent à la première entrée de symbole l'un des registres et délivrer la valeur correspondante du coefficient de couplage.

Un premier sommateur somme le coefficient de couplage ainsi sélectionné avec la sortie du sommateur de l'étage de rang i-1 de façon à délivrer le résultat de la sommation à ladite sortie auxiliaire.

Des deuxièmes moyens de sélection sont aptes à sélectionner, en fonction de la valeur du symbole retardé présent à la deuxième entrée de symbole, l'un des registres et délivrer la valeur correspondante du coefficient de couplage.

Un deuxième sommateur somme alors le coefficient de couplage sélectionné par ces deuxième moyens de sélection avec le signal d'erreur de façon à délivrer le résultat de la sommation au registre sélectionné par les deuxièmes moyens de sélection. Ceci effectue la mise à jour du coefficient de couplage ainsi sélectionné.

La sortie secondaire du dernier étage délivre les valeurs échantillonnées du signal de couplage, et est reliée à la deuxième entrée des moyens de soustraction, tandis que le premier sommateur du premier étage ajoute une valeur nulle au coefficient de couplage sélectionné par les premiers moyens de sélection. L'adjonction de cette valeur nulle permet de conserver une structure matérielle identique pour tous les étages de traitement. Ceci étant, on pourrait omettre ce premier sommateur dans le premier étage de traitement, et délivrer directement la valeur des coefficients de couplage sélectionnés par les premiers moyens de sélection (sortie du premier multiplexeur) à l'entrée du premier sommateur du deuxième étage de traitement.

Le bloc d'estimation de couplage comporte par ailleurs des moyens de séquencement pour, au rythme de la fréquence de transmission des symboles, délivrer à la sortie de symbole les symboles successifs contenus dans ladite bascule, et délivrer aux sommateurs les coefficients de couplage sélectionnés successifs.

Selon un mode de mise en oeuvre du dispositif selon l'invention, les moyens de retard comportent des moyens de retard élémentaires répartis entre les différents étages de traitement. Les moyens de retard élémentaires associés à chaque étage de traitement, du premier à l'avant dernier, comportent la bascule de stockage dudit étage de traitement et k-1 autres bascules de stockage connectées en série entre la sortie de la bascule de stockage de l'étage considéré et la deuxième entrée de symbole de cet étage (entrée de symbole retardé), k étant choisi compte tenu de la valeur prédéfinie dudit retard.

Le bloc d'estimation de couplage comporte avantageusement des moyens d'élaboration d'un symbole spécifique représentatif d'une absence de symbole dans le signal de transmission annexe (canal perturbateur). Il est également avantageusement prévus des moyens d'inhibition, connectés à la sortie des moyens d'élaboration et la sortie de symbole du dernier étage de traitement, et aptes à inhiber la mise à jour des coefficients de couplage à chaque délivrance d'un symbole spécifique par les moyens d'élaboration et jusqu'à ce que ce symbole spécifique ait été délivré à la sortie de symbole du dernier étage de traitement.

D'autres avantages et caractéristique de l'invention apparaîtront à l'examen de la description détaillée d'un mode de mise en oeuvre et de réalisation, nullement limitatif, et des dessins annexés sur lesquels :
la figure 1 illustre de façon très schématiquement une partie de deux circuits d'interface U selon l'invention disposés l'un à côté de l'autre dans un terminal de ligne ;
la figure 2 est une vue schématique plus détaillée de l'architecture interne de l'un des circuits d'interface U de la figure 1,
la figure 3 illustre de façon schématique le codage 2B1Q,
la figure 4 illustre plus en détail une partie du bloc d'estimation de couplage du dispositif de la figure 2,
la figure 5 illustre plus en détail l'architecture interne de l'un des étages de traitement du module illustré sur la figure 4, et
la figure 6 illustre le fonctionnement des moyens d'inhibition de la mise à jour des coefficients de couplage.

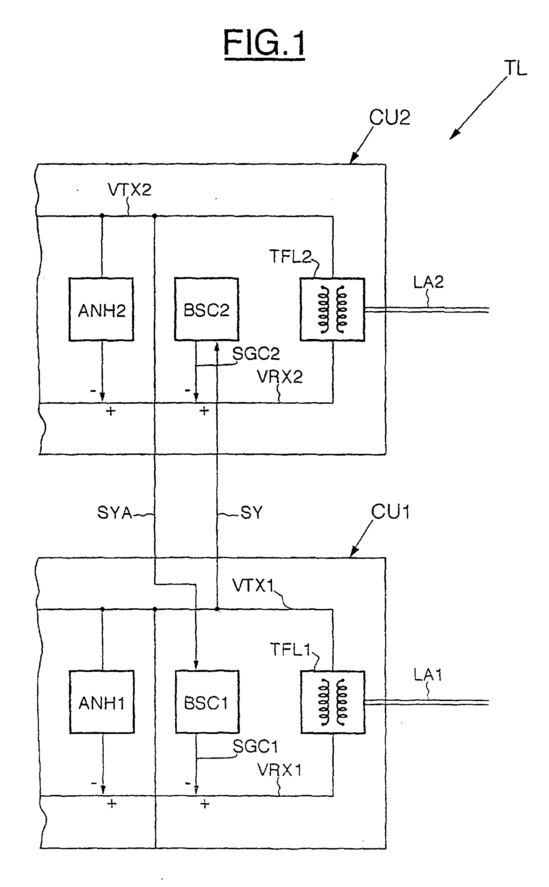

Sur la figure 1, les références CU1 et CU2 désignent respectivement deux circuits d'interface U respectivement connectés, par l'intermédiaire de deux transformateurs de ligne TFL1 et TFL2 à deux lignes d'abonnés LA1 et LA2.

De façon connue en soi, la voie d'émission VTX1 (VTX2) de chaque circuit d'interface U véhicule des symboles qui, après passage dans un filtre de mise en forme, fournissent un signal numérique échantillonné. Après passage dans un convertisseur numérique/analogique, puis dans un filtre passe-bas de lissage éliminant les parasites haute-fréquence, un signal analogique est délivré au transformateur de ligne en vue de sa transmission sur la paire de fils de cuivre formant la ligne téléphonique LA1 (LA2). Ce signal analogique est constitué d'impulsions respectivement associés aux symboles obtenus par le codage des informations numériques d'entrée.

Chaque circuit d'interface comporte par ailleurs une voie de réception VRX1 (VRX2) également connecté au même transformateur de ligne TFL1 (TFL2). Le signal reçu sur cette voie de réception est d'abord échantillonné par un convertisseur analogique/numérique avant d'être débarrassé de façon classique, d'un signal d'écho estimé à partir d'un bloc d'estimation d'écho ANH1 (ANH2) connecté entre la voie d'émission VTX1 et la voie de réception VRX1. Le bloc d'estimation d'écho, de réalisation classique et connu en soi, est nécessaire car le signal émis par le circuit d'interface sur la voie d'émission VTX1, et le signal que l'on souhaite recevoir sont présents en même temps sur la paire de fils téléphoniques LA1. Le dispositif d'annulation d'écho soustrait alors au signal reçu le signal que l'on vient d'émettre.

La proximité des deux circuits d'interface CU1 et CU2, et notamment la proximité des transformateurs de lignes TFL1 et TFL2 provoque un couplage mutuel entre ces deux circuits d'interface lors d'une émission et d'une réception conjointes par les deux circuits d'interface, respectivement. Il en résulte donc une perturbation de la voie de réception d'un circuit d'interface par la voie d'émission de l'autre circuit d'interface. L'invention prévoit alors de disposer au sein de chaque circuit d'interface un bloc d'estimation de couplage BSC1 (respectivement BSC2) recevant le signal transmis sur la voie d'émission du circuit d'interface voisin (circuit perturbateur CU2) et délivrant un signal de couplage SGC1 (respectivement SGC2) qui sera soustrait au signal circulant sur la voie de réception VRX1 (respectivement VRX2) de façon à débarrasser ce signal du signal de couplage ainsi estimé.

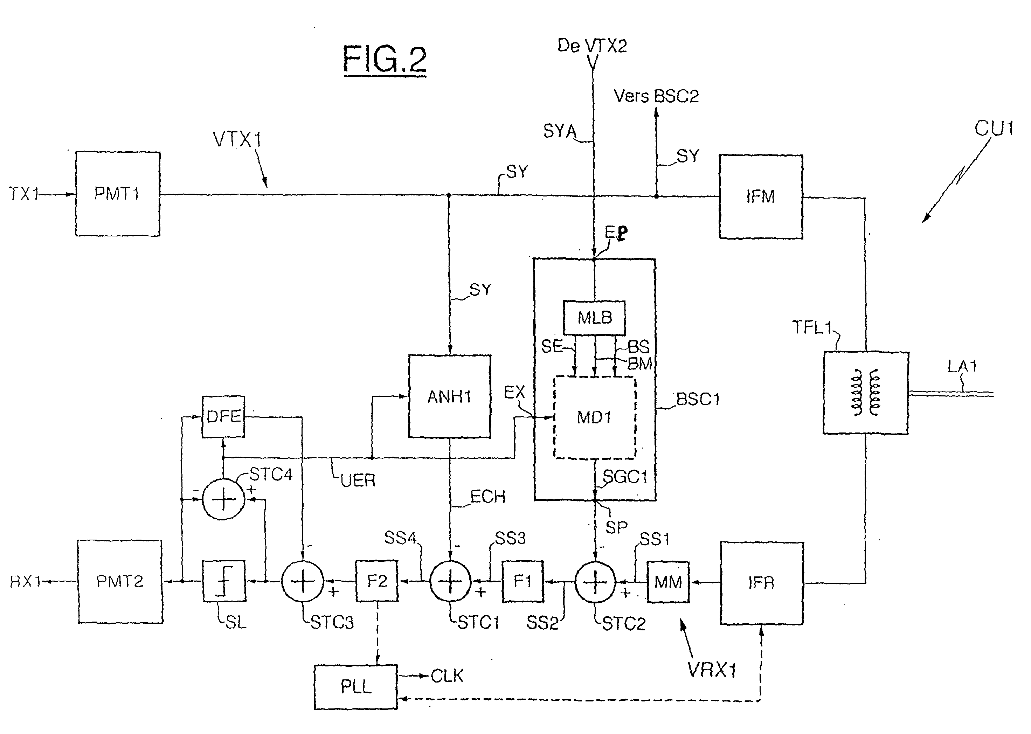

Si l'on se réfère maintenant plus particulièrement à la figure 2, on voit qu'un train d'informations numériques TX1, typiquement à un débit de 160 kbits/s est délivré à des moyens PMT1, de réalisation connue en soi, et comportant notamment un embrouilleur suivi d'un codeur 2B1Q ou 4B3T selon le code utilisé, pour fournir en sortie de ces moyens PMT1 sur la voie d'émission VTX1 un flot de symboles SY. Ces symboles SY sont délivrés à des moyens IFM, également de réalisation connue en soi, comportant notamment un filtre de mise en forme ayant essentiellement pour fonction de convertir les différents symboles reçus en impulsions numériques de façon à former un signal numérique échantillonné. Ces moyens IFM comportent également un convertisseur numérique analogique puis un filtre analogique passe-bas de lissage. Le signal analogique correspondant, constitué d'impulsions respectivement associées aux symboles SY, est délivré alors au transformateur de ligne TFL1 en vue de sa transmission sur la ligne d'abonné LA1.

Le signal reçu sur la voie de réception VRX1 est d'abord délivré dans des moyens IFR comportant notamment un convertisseur analogique/numérique échantillonnant, de façon classique, le signal analogique reçu à la fréquence Baud, c'est-à-dire la fréquence symbole (80 kHz dans le cas d'un code 2B1Q). Cette fréquence d'échantillonnage, fournie par le signal d'horloge CLK, est délivrée de façon classique par une boucle à verrouillage de phase PLL. Les valeurs échantillonnées sont ensuite délivrées dans une mémoire MM du type premier entré-premier sorti (First In-First Out : FIFO en langue anglaise) dont la fonction est notamment d'absorber l'oscillation (jitter) de la boucle à verrouillage de phase, afin de compenser les éventuelles différences de phases entre un symbole transmis à l'autre extrémité de la ligne d'abonné LA1 et le symbole reçu au niveau du circuit CU1. La taille de cette mémoire MM est liée à l'amplitude du jitter. Elle est par exemple égale à quatre symboles, c'est-à-dire qu'elle permet de stocker temporairement quatre échantillons de signal numérique.

Le signal retardé SS1 délivré en sortie de la mémoire MM est ensuite, comme on le verra plus en détail ci-après, débarrassé du signal de couplage SGC1 résultant de la perturbation occasionnée par le circuit d'interface voisin, dans des moyens de soustraction STC2.

Le signal résultant SS2 est ensuite délivré dans un premier filtre F1, par exemple un filtre passe-haut du premier ordre dont la fonction est notamment de raccourcir la réponse impulsionnelle du canal ce qui facilite le travail de l'annuleur d'écho ANH1.

Classiquement, on utilise une technique d'identification adaptative qui réalise une annulation d'écho par soustraction d'un écho estimé à partir d'un modèle du couplage acoustique entre les voies d'émission et de réception. En d'autres termes, on détermine l'écho estimé, à partir du signal SY transmis sur la voie d'émission VTX1 et du couplage estimé entre la voie d'émission VTX et la voie de réception VRX par un filtrage transversal numérique autoadaptatif. Ce filtre transversal est caractérisé par un nombre N de coefficients, par exemple 96 coefficients s'il s'agit d'un filtre unique à réponse impulsionnelle finie, ou bien 66 coefficients (64 coefficients d'un premier filtre à réponse impulsionnelle finie et 2 coefficients d'un filtre à réponse impulsionnelle infinie). Les coefficients du filtre hₜ(i) avec i variant de 0 à N-1, représente alors une réponse impulsionnelle à l'instant t dont la convolution avec le signal SY, représenté par les échantillons de celui-ci aux i instants précédant l'instant t, forme le signal d'écho estimé ECH.

Le signal SS4, débarrassé du signal d'écho ECH après passage dans des moyens de soustraction STC1, est délivré à des moyens d'égalisation qui ont pour but de réduire les interférences inter-symboles et de prendre la décision sur le symbole reçu. Plus précisément, ces moyens d'égalisation comportent un filtre F2 (dit filtre Forward) qui annule notamment le coefficient précurseur de la réponse impulsionnelle de la ligne d'abonné (canal). Ce filtre F2 est suivi classiquement d'un égaliseur récursif à décision qui est composé d'un décideur SL et d'un filtre récursif adaptatif DFE rebouclé de façon classique entre la sortie et l'entrée du décideur SL par un soustracteur STC3.

Enfin, un soustracteur STC4, connecté entre l'entrée et la sortie du décideur SL fournit un signal d'erreur UER qui est délivré au filtre récursif adaptatif DFE, au bloc d'estimation d'écho ANH1 ainsi qu'à une entrée auxiliaire EX du bloc d'estimation de couplage BSC1.

Les moyens d'égalisation sont ensuite suivis de moyens PMT2 effectuant notamment le décodage des symboles reçus pour délivrer le flot d'informations binaires reçues RX1.

Tous les moyens qui viennent d'être décrits, à l'exception du bloc d'estimation de couplage BSC1 et du soustracteur STC2, sont classiques et parfaitement connus de l'homme du métier. Ils sont notamment réalisés au sein du circuit d'interface commercialisé par le demandeur sous la référence STLC 5410.

Avant de revenir plus en détail sur la structure et le fonctionnement du bloc d'estimation de couplage selon l'invention, on rappelle maintenant brièvement les caractéristiques du codage 2B1Q qui est utilisé ici à titre d'exemple.

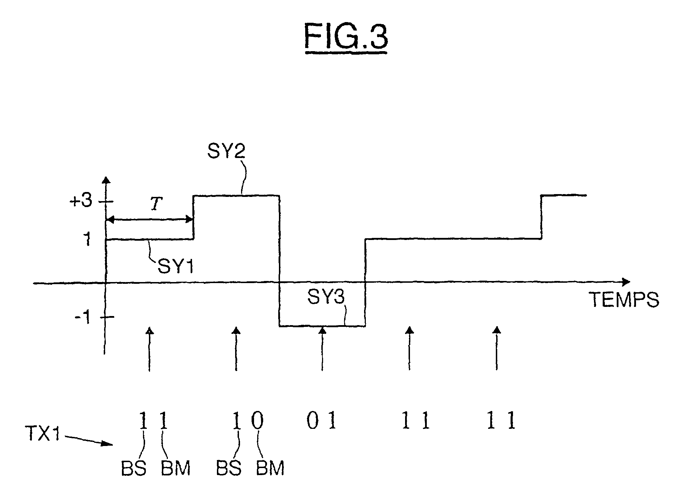

Comme illustré sur la figure 3, le code 2B1Q associé à 2 bits du flot TX1 d'informations binaires d'entrée, un des quatre symboles (ou quaternaires) +1, +3, -1, -3 respectivement référencés SY1, SY2 et SY3 (le symbole -3 n'est pas représenté sur l'exemple illustré sur la figure 3).

Chaque paire de bits extraits du flot d'informations binaires comporte un premier bit dit bit de signe "BS", et un deuxième bit dit "bit de magnitude" BM. Il y a alors une correspondance bi-univoque entre les valeurs de bits de signe et de magnitude et les symboles, conformément à la table de codage ci-dessous :

| signe | magnitude | symbole |
|---|---|---|
| 1 | 0 | +3 |
| 1 | 1 | +1 |
| 0 | 1 | -1 |
| 0 | 0 | -3 |

Chaque symbole SYi du code 2B1Q a une durée T = 12,5 µs. En d'autres termes, les symboles SYi du code 2B1Q sont délivrés à la fréquence symbole de 80 KHz.

Il convient de noter ici, que contrairement au cas où un codage 4B3T est sélectionné, il n'est pas nécessaire pour un codage 2B1Q de prévoir un codeur spécifique dans les moyens PMT1. En effet, de simples moyens de conversion série/parallèle, par exemple réalisés au moyen d'un registre à décalage, sont alors prévus dans des moyens PMT1 de façon à extraire du flot d'informations binaires d'entrée les paires successives de bits.

Le bloc d'estimation de couplage BSC1 comporte une entrée principale EP recevant les symboles SYA émis par la voie d'émission du circuit d'interface voisin CU2. D'une façon générale, ce bloc BSC1 comporte en tête des moyens d'élaboration MLB permettant, dans le cas où aucun symbole SYA n'est transmis sur la voie d'émission VTX2 de délivrer un mot numérique (symbole spécifique) représentatif de cette absence de symbole. On verra plus en détail ci-après qu'il est important d'indiquer aux étages de traitement de ce bloc BSC1 qu'aucun symbole perturbateur n'est émis par le circuit d'interface voisin.

En pratique, l'émetteur des deux circuits d'interface U émet un signal spécifique représentatif d'une absence d'émission. Il s'agit en l'espèce d'un bit spécifique SE dont la valeur logique 1 (par exemple) indique qu'aucun symbole n'est transmis.

Ainsi, dans le cas présent, avec un codage 2B1Q, les moyens d'élaboration MLB peuvent se résumer à une bascule à trois entrées et trois sorties recevant respectivement le bit spécifique SE représentatif d'une absence ou d'une présence d'un symbole perturbateur SYA, ainsi que le bit de signe BS et le bit de magnitude BM de tout symbole SYA transmis sur le canal perturbateur.

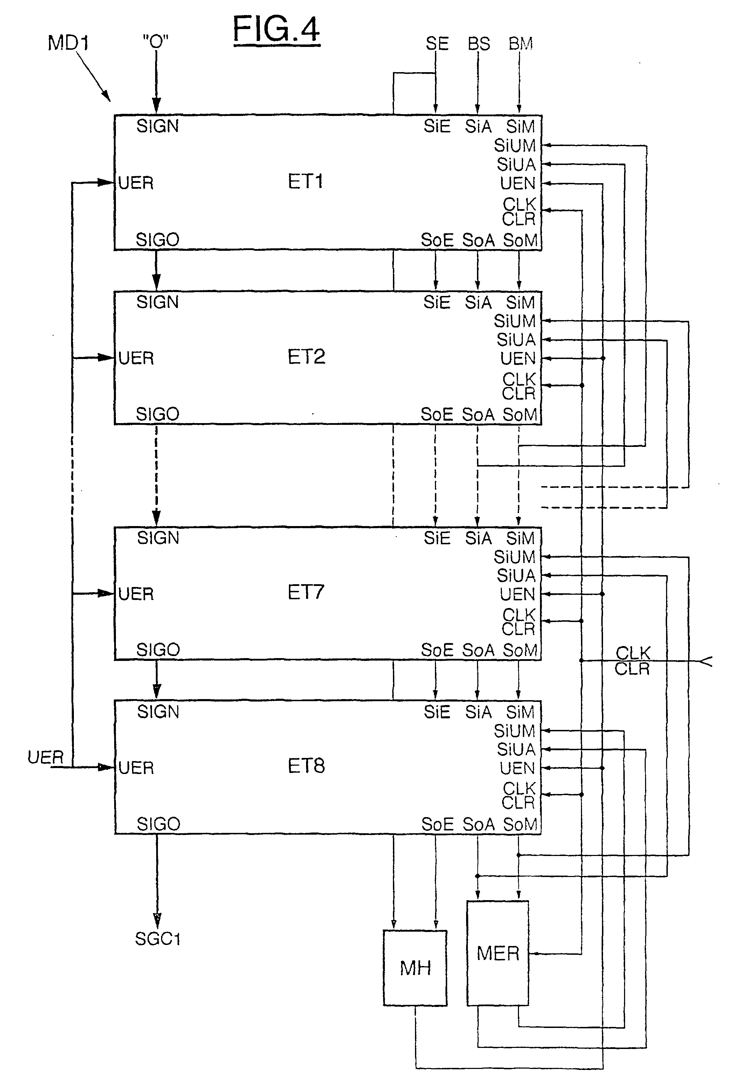

Ces trois bits SE, BM et BS sont ensuite transmis à un module de traitement MD1 plus particulièrement illustré sur la figure 4, connecté par ailleurs à l'entrée auxiliaire EX recevant le signal d'erreur UER, et délivrant en sortie le signal de couplage estimé SGC1.

La sortie SP du bloc BSC1, recevant le signal SGC1 est reliée au soustracteur STC2 de façon à débarrasser le signal SS1 de ce signal de couplage estimé.

Comme plus particulièrement sur la figure 4, le module MD1 du bloc BSC1 comporte n étages de traitements successifs (n = 8 dans le cas présent).

Chaque étage de traitement comporte une première entrée de symbole SiE, SiA, SiM recevant respectivement les trois bits SE, BS et BM, ainsi qu'une deuxième entrée de symbole SiUA, SiUM recevant respectivement les bits de signe et de magnitude d'un symbole retardé par rapport au symbole reçu à la première entrée de symbole.

L'étage de traitement courant comporte par ailleurs une sortie de symbole SoE, SoA, SoM de façon à délivrer, à la première entrée de symbole de l'étage suivant, le symbole reçu par cet étage courant.

Chaque étage de traitement comporte par ailleurs une entrée de mise à jour UER reliée à l'entrée auxiliaire EX pour recevoir le signal d'erreur UER.

Chaque étage de traitement comporte encore une entrée secondaire SIGN et une sortie secondaire SIG0 reliée à l'entrée secondaire de l'étage suivant. La sortie secondaire SIG0 du dernier étage de traitement ET8 délivre le signal de couplage estimé SGC1. L'entrée secondaire SIGN du premier étage de traitement ET1 reçoit, dans l'exemple décrit ici, la valeur nulle.

Chaque étage de traitement comporte par ailleurs une entrée d'inhibition UEN recevant un signal d'inhibition UEN, sur la fonction duquel on reviendra plus en détail ci-après.

Enfin chaque étage de traitement comporte une autre entrée pour recevoir le signal d'horloge de séquencement CLK ainsi qu'un signal de remise à zéro CLR.

L'obtention du symbole temporellement retardé par rapport au symbole courant reçu par l'étage de traitement courant, est obtenu par le rebouclage des ports SoA et SoM de la sortie de symboles d'un étage de rang supérieur, sur l'entrée de symbole retardé SiUA et SiUM de l'étage courant. Le nombre d'étages de traitement ainsi rebouclés dépend du nombre de retards induits sur le calcul et la propagation du signal d'erreur UER. Ce nombre, équivalent à un retard sur la série des symboles, doit être choisi tel que la cohérence entre ce symbole entrant par les ports SiUA, SiUM, et l'erreur UER soit maximale, assurant aussi la convergence de l'adaptation.

Bien entendu, de façon à conserver le même retard pour les derniers étages, on rajoute des moyens de retard additionnels MER. Dans le cas présent, avec la valeur du retard illustrée (k = 2 comme on le verra ci-après) des moyens MER permettent de reboucler les ports SoA et SoM de la sortie de symbole de l'étage ET8 sur l'entrée de symbole retardé SiUA et SiUM de cet étage ET8.

Enfin, des moyens d'inhibition MH sur la fonction desquels on reviendra plus en détail ci-après, reçoivent d'une part le bit spécifique SE et sont d'autre part connectés au port SoE de la sortie de symbole du dernier étage de traitement. Ces moyens MH délivrent le signal d'inhibition UEN.

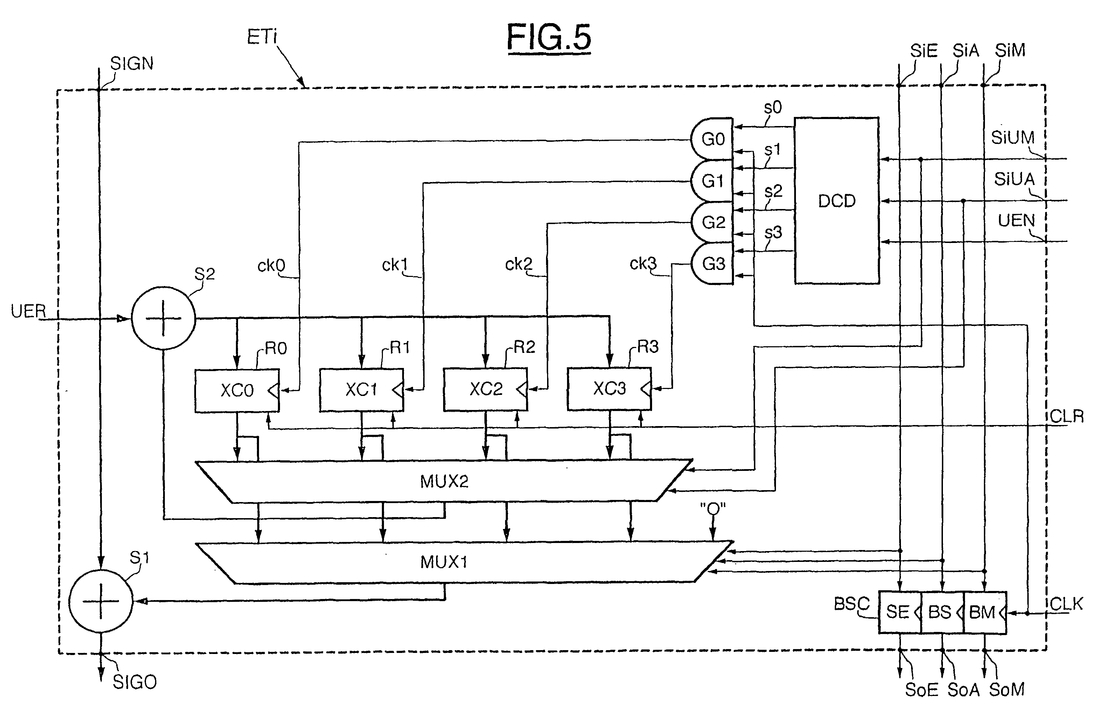

Si l'on se réfère maintenant plus particulièrement à la figure 5, on voit que l'étage de traitement ETi de rang (1≤ i ≤ n), comporte une bascule de stockage BSC, commandée par le signal d'horloge CLK et connectée entre l'entrée de symbole SiE, SiA, SiM et la sortie de symbole SoE, SoA et SoM. Cette bascule de stockage BSC est donc apte à stocker temporairement chaque symbole courant reçu par cet étage, ou bien le symbole spécifique représentatif d'une absence de transmission sur le canal perturbateur.

L'étage de traitement ETi comporte par ailleurs quatre registres RO-R3, stoquant respectivement quatre coefficients de couplage XCO-XC3 respectivement associés aux quatre valeurs possibles des symboles de transmission du code 2B1Q.

Ces quatre registres sont respectivement commandés par quatre signaux d'horloge élémentaires cko-ck3 délivrés par quatre portes logiques ET respectivement référencées G0-G3. Chaque porte logique Gj reçoit en entrée le signal d'horloge CLK ainsi qu'un signal de décodage sj délivré par un décodeur classique DCD recevant en entrée les deux bits du symbole retardé SiUA et SiUM ainsi que le signal d'inhibition UEN.

Ces quatre registres peuvent être remis à zéro par le signal de remise à zéro CLR, par exemple au démarrage du système.

Les sorties respectives de ces quatre registres sont reliées à quatre entrées d'un multiplexeur MUX1 formant des premier moyens de sélection, et commandé par les trois bits SE, BS et BM reçus à l'entrée de symbole. Il convient de noter ici que le multiplexeur MUX1 comporte une cinquième entrée qui reçoit constamment la valeur nulle.

La sortie de ce premier multiplexeur MUX1 est reliée à la première entrée d'un premier sommateur S1 dont l'autre entrée est reliée à l'entrée secondaire SIGN de cet étage courant ETi. La sortie de ce premier sommateur est reliée à la sortie secondaire SIG0 de cet étage.

Les quatre sorties des quatre registres R0-R3 sont également reliées aux quatre entrées d'un deuxième multiplexeur MUX2 sélectionné par les valeurs des deux bits de signe de magnitude du symbole retardé délivré à la deuxième entrée de symboles SiUA, SiUM. La sortie de ce multiplexeur MUX2 est reliée à une entrée d'un deuxième sommateur S2 dont l'autre entrée reçoit le signal d'erreur UER. La sortie de ce deuxième sommateur est reliée aux quatre entrées des quatre registres R0-R3.

On va maintenant décrire plus particulièrement le fonctionnement de ce bloc d'estimation de couplage.

On suppose dans un premier temps que le circuit d'interface voisin CU2 émet un flot continu de symboles SYA. Pour chacun de ces symboles de ce flot, le bit SE est donc nul.

Chacun des symboles du flot transmis par le circuit d'interface CU2 va donc successivement se propager dans chacun des n étages de traitement au rythme des fronts montants du signal d'horloge CLK, c'est-à-dire au rythme de la fréquence de transmission des symboles, et ce par l'intermédiaire des différentes bascules BSC. Au sein de l'étage de traitement courant de rang i, on va sélectionner, à l'aide du multiplexeur MUX1, celui des coefficients de couplage XC0-XC3 stocké dans celui des registres R0-R3 correspondant à la valeur du symbole courant reçu à la première entrée du symbole et déterminé par la valeur du bit de signe BS et du bit de magnitude BM.

Ce coefficient de couplage est alors sommé avec la sortie du sommateur S1 de l'étage précédent et le résultat de la sommation est délivré à l'étage suivant.

L'homme du métier remarque donc que les différents échantillons du signal de couplage SGC1 sont obtenus par une somme de n coefficients de couplage dont les valeurs dépendent des n symboles de transmission qui ont été successivement reçus par les n étages de traitement.

Par ailleurs, la mise à jour des coefficients de couplage s'effectue à partir de la valeur, non pas du symbole reçu à la première entrée de symbole, mais de la valeur du symbole retardé par rapport à ce symbole et présent à la deuxième entrée de symbole SiUM, SiUA. Plus précisément, en fonction de la valeur du bit de signe et du bit de magnitude de ce symbole retardé, les moyens de décodage DCD et l'ensemble des portes logiques Gj correspondantes, délivrent à celui des registres R0-R3 correspondant à la valeur de ce symbole retardé, le signal d'horloge correspondant ckj. La valeur courante du coefficient de couplage correspondant est alors délivrée en sortie du registre ainsi désigné. Par ailleurs, Les valeurs du bit de signe et du bit de magnitude de ce symbole retardé permettent de commander de façon analogue le multiplexeur MUX2 pour relier la sortie de ce registre ainsi désigné à la sortie du multiplexeur MUX2 et par conséquent à la première entrée du sommateur S2.

On ajoute alors à la valeur courante du coefficient de couplage ainsi sélectionné, la valeur échantillonnée UER du signal d'erreur. Le résultat de cette somme fournit une nouvelle valeur du coefficient de couplage que l'on restocke dans le même registre.

Le nombre k de périodes symboles séparant le symbole retardé du symbole courant, c'est-à-dire en fait la valeur du retard pour la mise à jour des coefficients de couplage, est choisi de façon à assurer la convergence des différents algorithmes d'estimation, et notamment la convergence de l'algorithme d'estimation du signal de couplage.

La valeur de k dépend de la structure de la voie de réception du circuit d'interface et d'une façon générale du temps de propagation entre le soustracteur STC2 et le soustracteur STC4. Une valeur a priori de ce retard k peut être déterminée notamment en fonction du nombre de filtres présents sur la voie de réception entre les deux soustracteurs précédemment mentionnés. Une simulation permet ensuite d'assumer cette valeur du retard k. Ainsi, pour une structure du type de celle illustrée sur la figure 2, pour une taille de FIFO égale à 4, et pour un nombre n de coefficient de couplage égal à 8, une valeur de k égale à 5 permet d'obtenir la convergence recherchée.

Sur la figure 4, compte tenu de la présence d'une bascule BSC au sein de chaque étage de traitement, la valeur k a été prise égale à 2 à des fins de simplification du dessin.

Lorsqu'aucun symbole n'est émis sur la voie d'émission du circuit d'interface perturbateur, la valeur du bit SE est égale à 1. Il convient alors d'affecter un coefficient de couplage nul puisque cette absence de symbole n'entraîne aucune perturbation sur la voie de réception du circuit d'interface CU1. Aussi, en présence d'un bit SE = 1, le multiplexeur MUX1 relie alors la cinquième entrée (valeur nulle) à la sortie ce qui a pour effet de sommer une valeur nulle dans le sommateur S1.

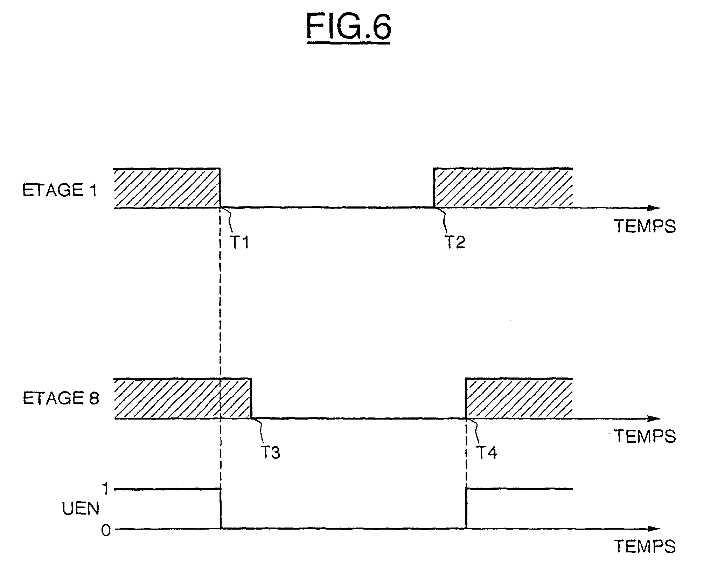

Par ailleurs, la mise à jour des coefficients de couplage dans les registres R0-R3 est inhibée pendant une période d'absence de transmission sur la voie d'émission du circuit d'interface perturbateur, comme illustré très schématiquement sur la figure 6.

On suppose que sur cette figure 6, que pendant la période T1-T2, il ne se produit aucune transmission de symbole sur la voie d'émission du circuit d'interface perturbateur CU2.

Compte tenu de la propagation au rythme de la fréquence symbole, dans les n étages de traitement, cette période T1-T2 se traduit par une période T3-T4 en sortie du huitième étage de traitement.

Avant l'instant T1, le signal d'inhibition UEN était égal à 1, ce qui autorisait la mise à jour des coefficients de couplage.

A l'instant T1, les moyens d'inhibition MH détectent la montée à 1 du bit SE ce qui a pour effet de faire passer le signal logique UEN à l'état zéro et donc d'interdire la mise à jour des registres R0-R3 (leurs valeurs restent figées car les signaux d'horloge ck0-ck3 ne sont pas délivrés). Cette inhibition de la mise à jour reste effective jusqu'au temps T4 à partir duquel le signal UEN remonte à l'état 1.

Sur la figure 2, le soustracteur STC2 a été représenté en amont du soustracteur STC1. Il aurait été possible de placer ce soustracteur STC2 en aval du soustracteur STC1 ce qui aurait eu pour conséquence notamment de réduire la valeur du retard k pour la mise à jour des coefficients de couplage.

Ceci étant, le fait de soustraire d'abord le signal de couplage puis de soustraire ensuite le signal d'écho, permet par exemple de réaliser sur un composant séparé les moyens IFR et la mémoire MM ainsi que le bloc BSC1 puis de connecter aisément cet ensemble sur un autre composant, par exemple déjà existant, comportant les autres éléments du circuit d'interface.

Bien entendu , tout ce qui vient d'être décrit n'est pas limité au code 2B1Q mais s'applique à tout code de transmission quel que soit le nombre de symboles utilisés pour ce code moyennant bien entendu une adaptation en conséquence des différents moyens qui viennent d'être décrits et notamment une adaptation du nombre correspondant des registres R0-R3, et du nombre d'entrées/sorties des moyens d'élaboration MLB et des bascules de stockage.

Par ailleurs, dans le cas où plusieurs circuits d'interface perturbent un autre circuit d'interface, il convient de dupliquer autant de fois que nécessaire le bloc d'estimation de couplage BSC1, de relier ces autres blocs d'estimation de couplage aux voies d'émission respectives des autres circuits perturbateurs, et de relier l'ensemble des blocs d'estimation de couplage au soustracteur STC2.

## Revendications

1. Procédé de minimisation des effets perturbateurs de couplage entre deux dispositifs voisins d'émission/réception respectivement connectés à deux lignes téléphoniques d'abonnés véhiculant respectivement de façon temporellement synchrone des flots de symboles choisis parmi S symboles possibles de transmission, dans lequel on retarde le signal numérique reçu sur la voie de réception (VRX1) d'un premier dispositif (CU1) d'un retard égal à p fois la période de transmission des symboles, et on débarrasse ce signal retardé d'un signal d'écho (ECH) estimé à partir du signal (SY) transmis sur la voie d'émission (VTX1) du premier dispositif, d'au moins un filtre adaptatif à réponse impulsionnelle finie et d'un signal d'erreur (UER), **caractérisé par le fait qu'**on estime un signal de couplage (SGC1) entre la voie d'émission (VTX2) du deuxième dispositif (CU2) et ladite voie de réception (VRX1) du premier dispositif (CU1) à partir de sommes successives de n coefficients (XC0-XC3) d'un filtre adaptatif d'estimation de couplage déterminés en fonction du signal (SYA) transmis sur la voie d'émission du deuxième dispositif, n étant supérieur ou égal à p et inférieur ou égal à un huitième du nombre des coefficients du filtre d'estimation d'écho (ANH1), **par le fait qu'**on met à jour les coefficients (XC0-XC3) du filtre d'estimation de couplage à partir du signal d'erreur (UER) et d'un signal (SiUA, SiUM) temporellement retardé par rapport au signal transmis (SYA) sur la voie d'émission du deuxième dispositif d'un retard (R) ayant une valeur prédéfinie choisie de façon à assurer la convergence de l'estimation du signal de couplage et **par le fait qu'**on débarrasse également le signal retardé dudit signal de couplage estimé.

2. Procédé selon la revendication 1, **caractérisé par le fait que**, pour un flot continu de symboles (SYA) transmis sur la voie d'émission du deuxième dispositif, l'estimation du signal de couplage par filtrage adaptatif comporte
la détermination, pour chaque symbole (SYA) transmis, d'un coefficient de couplage (XC0-XC3) en choisissant, en fonction de la valeur du symbole transmis, l'un des coefficients de couplage (XC0-XC3) d'un groupe de couplage associé à ce symbole et composé de S coefficients de couplage respectivement associés aux S valeurs possibles des symboles de transmission,
l'estimation dudit signal de couplage (SGC1) par des sommes successives de n coefficients de couplage respectivement associés à n symboles consécutifs dudit flot et respectivement choisis parmi n groupes de couplage,
et **par le fait que** la mise à jour des coefficients de couplage comprend la mise à jour du groupe de couplage associé au symbole de rang i en mettant à jour la valeur du coefficient de couplage de ce groupe associé à la valeur du symbole de rang i-k à partir de la valeur précédente de ce symbole de rang i-k et de la valeur du signal d'erreur, k étant une valeur prédéfinie choisie de façon à assurer la convergence de l'estimation du signal de couplage.

3. Procédé selon la revendication 2, **caractérisé par le fait qu'**en absence de symbole transmis sur la voie d'émission du deuxième dispositif, on élabore un symbole spécifique (SE=1) représentatif d'une absence de symbole transmis et on affecte à ce symbole spécifique un coefficient de couplage nul, **par le fait que** pour un flot discontinu de symboles transmis par le deuxième dispositif, on estime le signal de couplage (SGC1) par des sommes successives de n coefficients de couplage comportant les coefficients de couplage respectivement associés aux symboles dudit flot et respectivement choisis parmi les groupes correspondants de couplage, ainsi que les coefficients de couplage nuls correspondant aux absences de transmission, et **par le fait qu'**on s'abstient de mettre à jour les n groupes de couplage à chaque présence d'un symbole spécifique et pendant une durée égale à n fois la période de transmission des symboles.

4. Procédé selon la revendication 3, **caractérisé par le fait qu'**on estime le signal de couplage (SGC1) en calculant, à la fréquence de transmission des symboles, des échantillons de signal de couplage par n traitements élémentaires successifs effectués au rythme de la fréquence de transmission des symboles, et **par le fait que** dans chaque traitement élémentaire, on reçoit un symbole (SYA) du flot de symboles transmis par le deuxième dispositif ou un symbole spécifique (SE=1), un symbole temporellement retardé par rapport audit symbole ou audit symbole spécifique, et une valeur échantillonnée du signal d'erreur (UER), on détermine le coefficient de couplage associé au symbole ou au symbole spécifique reçu, que l'on somme (S1) avec le résultat de la sommation homologue effectuée au traitement précédent, et, lorsque la mise à jour des coefficients de couplage est autorisée, on met à jour le coefficient de couplage associé au symbole retardé reçu en sommant (S2) la valeur précédente de ce coefficient de couplage avec la valeur échantillonnée du signal d'erreur (UER).

5. Procédé selon l'une des revendications précédentes, **caractérisé par le fait qu'**on débarrasse d'abord le signal retardé (SS1) du signal de couplage (SGC1) puis on débarrasse le signal résultant (SS3) du signal d'écho estimé (ECH).

6. Dispositif d'émission/réception d'un signal téléphonique, comprenant une voie d'émission (VTX1) et une voie de réception (VRX1), connectées à une ligne téléphonique d'abonné (LA1), pour émettre et recevoir des signaux de transmission et de réception comportant des flots de symboles numériques (SY) choisis parmi S symboles possibles de transmission, une mémoire (MM) disposée sur la voie de réception et apte à stocker temporairement p symboles, un bloc d'estimation d'écho (ANH1) connecté entre la voie d'émission et de réception et comportant un filtre adaptatif à réponse impulsionnelle finie recevant le signal de transmission ainsi qu'un signal d'erreur (UER) élaboré sur la voie de réception, et des premiers moyens de soustraction (STC1) possédant une première entrée reliée à la sortie de la mémoire et une deuxième entrée reliée à la sortie du bloc d'estimation d'écho, **caractérisé par le fait qu'**il comprend en outre un bloc d'estimation de couplage (BSC1) comportant
des moyens de filtrage adaptatif à n coefficients de couplage, n étant supérieur ou égal à p et inférieur ou égal à un huitième du nombre des coefficients du filtre d'estimation d'écho, et des moyens d'estimation recevant un signal de transmission annexe (SYA) transmis sur la voie d'émission d'un dispositif voisin d'émission/réception (CU2) de façon temporellement synchrone audit signal de transmission, aptes à déterminer successivement les n coefficients de couplage en fonction du signal de transmission annexe et à les sommer successivement (S1) de façon à délivrer un signal de couplage (SGC1) représentatif du couplage estimé entre ladite voie de réception (VRX1) et la voie d'émission (VTX2) du dispositif voisin (CU2),
des moyens de retard (BSC, MER) aptes à délivrer un signal de transmission temporellement retardé par rapport au signal de transmission annexe d'un retard ayant une valeur prédéfinie (k) choisie de façon à assurer la convergence des moyens de filtrage,
et des moyens de mise à jour aptes à mettre à jour les coefficients de couplage des moyens de filtrage à partir du signal de transmission temporellement retardé et du signal d'erreur,
des deuxièmes moyens de soustraction (STC2) possédant une première entrée reliée à la sortie de la mémoire et une deuxième entrée reliée à la sortie des moyens de couplage.

7. Dispositif selon la revendication 6, **caractérisé par le fait que** le bloc d'estimation de couplage (BSC1) comporte une entrée principale (EP) pour recevoir le flot de symboles (SYA) du signal de transmission annexe, une entrée auxiliaire (EX) pour recevoir le signal d'erreur (UER), une sortie(SP) pour délivrer le signal de couplage estimé, **par le fait que** les moyens de filtrage, les moyens d'estimation et les moyens de mise à jour sont répartis sur n étages de traitement (ET1-ET8) connectés en série entre ladite entrée principale et la sortie et tous reliés à ladite entrée auxiliaire, et **par le fait que** l'étage de rang i comporte une première entrée de symbole (SiE, SiA, SiM) pour recevoir un symbole courant du signal de transmission annexe, une deuxième entrée de symbole (SiUM, SiUA) pour recevoir un symbole temporellement retardé par rapport au symbole courant et délivré par les moyens de retard, une entrée de mise à jour (UER) pour recevoir le signal d'erreur (UER) , une sortie de symbole (SoE, SoA, SoM), une bascule (BSC) connectée entre la première entrée de symbole et la sortie de symbole pour stocker temporairement le symbole courant, une sortie secondaire (SiGO), S registres (R0-R3) pour stocker respectivement S coefficients de couplage (XC0-XC3), des premiers moyens de sélection (MUX1) pour sélectionner en fonction de la valeur du symbole présent à la première entrée de symbole l'un des registres et délivrer la valeur correspondante du coefficient de couplage, un premier sommateur (S1) pour sommer le coefficient de couplage ainsi sélectionné avec la sortie du premier sommateur (S1) de l'étage de rang i-1 et délivrer le résultat de la sommation à ladite sortie secondaire (SiGO), des deuxièmes moyens de sélection (MUX2) pour sélectionner, en fonction de la valeur du symbole retardé présent à la deuxième entrée de symbole, l'un des registres et délivrer la valeur correspondante du coefficient de couplage, un deuxième sommateur(S2) pour sommer le coefficient de couplage sélectionné par ces deuxième moyens de sélection avec le signal d'erreur (UER) et délivrer le résultat de la sommation au registre sélectionné par les deuxièmes moyens de sélection,
**par le fait que** la sortie secondaire du dernier étage (ET8) est reliée à la deuxième entrée des moyens de soustraction (STC2), tandis que le premier sommateur (S1) du premier étage (ET1) ajoute une valeur nulle au coefficient de couplage sélectionné par les premiers moyens de sélection,
et **par le fait que** le bloc d'estimation de couplage (BSC1) comporte des moyens de séquencement pour, au rythme de la fréquence de transmission des symboles (CLK), délivrer à la sortie de symbole les symboles successifs contenus dans ladite bascule, et délivrer aux sommateurs les coefficients de couplage sélectionnés successifs.

8. Dispositif selon la revendication 7, **caractérisé par le fait que** les moyens de retards comportent des moyens de retard élémentaires répartis entre les différents étages de traitement, et **par le fait que** les moyens de retards élémentaires associés à chaque étage de traitement, du premier à l'avant-dernier, comportent la bascule de stockage (BSC) dudit étage de traitement et k-1 autres bascules de stockage connectées en série entre la sortie de la bascule de stockage de l'étage considéré et la deuxième entrée de cet étage, k étant choisi compte tenu de la valeur prédéfinie dudit retard.

9. Dispositif selon la revendication 7 ou 8, **caractérisé par le fait que** le bloc d'estimation de couplage comportent des moyens d'élaboration (MLB) d'un symbole spécifique représentatif d'une absence de symbole dans le signal de transmission annexe, et des moyens d'inhibition (MH), connectés à la sortie des moyens d'élaboration et la sortie de symbole du dernier étage de traitement, et aptes à inhiber la mise à jour des coefficients de couplage à chaque délivrance d'un symbole spécifique par les moyens d'élaboration et jusqu'à ce que ce symbole spécifique ait été délivré à la sortie de symbole du dernier étage de traitement.

10. Dispositif selon l'une des revendications 6 à 9, **caractérisé par le fait que** les deuxièmes moyens de soustraction (STC2) sont disposés entre la mémoire (MM) et les premiers moyens de soustraction (STC1).

## Patentansprüche

1. Verfahren zur Minimierung von Kopplungsstörungseffekten zwischen zwei benachbarten Sende/Empfangsfernsprecheinrichtungen, an denen jeweils eine Fernsprechteilnehmerleitung angeschlossen ist, die jeweils auf zeitlich synchrone Weise Symbolflüsse aus Symbolen, die aus S möglichen Übertragungssymbolen ausgewählt sind, transportiert, in welchem Verfahren das über den Empfangskanal (VRX1) einer ersten Vorrichtung (CU1) empfangene digitale Signal um eine Verzögerung, die gleich p mal die Übertragungsperiode der Symbole ist, verzögert wird und dieses verzögerte Signal von einem Echosignal (ECH) befreit wird, das ausgehend von dem über den Sendekanal (VTX1) der ersten Vorrichtung übertragenen Signal (SY), mindestens einem adaptativen Filter mit endlicher Impulsantwort und einem Fehlersignal (UER) geschätzt wird, **dadurch gekennzeichnet, daß**
ausgehend von sukzessiven Summen aus n Koeffizienten (XC0-XC3) eines adaptativen Kopplungsschätzungsfilters, die als Funktion des über den Sendekanal der zweiten Vorrichtung übertragenen Signals (SYA) ermittelt werden, wobei n größer oder gleich p und kleiner oder gleich einem Achtel der Anzahl der Koeffizienten des Echoschätzungsfilters (ANH1) ist, ein Kopplungssignal (SGC1) zwischen dem Sendekanal (VTX2) der zweiten Vorrichtung (CU2) und dem Empfangskanal (VRX1) der ersten Vorrichtung (CU1) geschätzt wird,
dadurch, daß ausgehend von dem Fehlersignal (UER) und einem Signal (SiUA,SiUM), das bezüglich des auf dem Sendekanal der zweiten Vorrichtung übertragenen Signals (SYA) um eine Verzögerung (R) zeitlich verzögert ist, die einen vorgegebenen Wert hat, der so gewählt ist, um die Konvergenz des Kopplungsschätzungssignals sicherzustellen, die Koeffizienten (XC0-XC3) des Kopplungsschätzungsfilters aktualisiert werden, und
dadurch, daß das verzögerte Signal auch von dem Kopplungsschätzungssignal befreit wird.

2. Verfahren nach Anspruch 1, **dadurch gekennzeichnet, daß** für einen kontinuierlichen Fluß aus über den Sendekanal der zweiten Vorrichtung übertragenen Symbolen (SYA) die Schätzung des Kopplungssignals mittels adaptativen Filters aufweist:
die Ermittlung eines Kopplungskoeffizienten (XC0-XC3) für jedes übertragene Symbol (SYA) dadurch, daß als Funktion des Werts des übertragenen Symbols einer der Kopplungskoeffizienten (XC0-XC3) einer Kopplungsgruppe gewählt wird, die mit diesem Symbol verknüpft ist und aus S Kopplungskoeffizienten besteht, die jeweils mit S möglichen Werten der Übertragungssymbole verknüpft sind,
die Schätzung des Kopplungssignals (SGC1) mittels sukzessiver Summen aus n Kopplungskoeffizienten, die jeweils mit n aufeinanderfolgenden Symbolen des Flusses verknüpft sind und jeweils aus n Kopplungsgruppen ausgewählt sind, und
dadurch, daß das Aktualisieren der Kopplungskoeffizienten das Aktualisieren der mit dem Symbol vom Rang i verknüpften Kopplungsgruppe aufweist, indem der Kopplungskoeffizient dieser Gruppe, die mit dem Wert des Symbols vom Rang i-k verknüpft ist, ausgehend von dem vorherigen Wert dieses Symbols vom Rang i-k und dem Wert des Fehlersignals aktualisiert wird, wobei k ein vordefinierter Wert ist, der so gewählt ist, um die Konvergenz der Schätzung des Kopplungssignals sicherzustellen.

3. Verfahren nach Anspruch 2, **dadurch gekennzeichnet, daß** bei Abwesenheit eines über den Sendekanal der zweiten Vorrichtung übertragenen Symbols ein spezielles Symbol (SE=1) ausgearbeitet wird, das Abwesenheit eines übertragenen Symbols repräsentiert, und diesem speziellen Symbol ein Kopplungskoeffizient Null zugewiesen wird, dadurch, daß für einen von der zweiten Vorrichtung übertragenen diskontinuierlichen Symbolfluß das Kopplungssignal (SGC1) mittels sukzessiver Summen aus n Kopplungskoeffizienten geschätzt wird, die die Kopplungskoeffizienten, die jeweils mit den Symbolen des Symbolflusses verknüpft sind und jeweils aus den entsprechenden Kopplungsgruppen ausgewählt sind, sowie die Kopplungskoeffizienten Null, die Abwesenheit einer Übertragung entsprechen, aufweisen, und dadurch, daß das Aktualisieren der n Kopplungsgruppen bei jeder Anwesenheit eines speziellen Symbols und während einer Dauer, die gleich n mal der Übertragungsperiode der Symbole ist, unterbleibt.

4. Verfahren nach Anspruch 3, **dadurch gekennzeichnet, daß** das Kopplungssignal (SGC1) geschätzt wird, indem in der Frequenz der Übertragung der Symbole Abtastwerte des Kopplungssignals mittels n aufeinanderfolgenden elementaren Verarbeitungen, die im Takt der Übertragungsfrequenz der Symbole ausgeführt werden, berechnet werden und dadurch, daß in jeder Grundverarbeitung ein Symbol (SYA) des von der zweiten Vorrichtung übertragenen Symbolflusses oder ein spezielles Symbol (SE=1), ein bezüglich dieses Symbols oder dieses speziellen Symbols zeitlich verzögertes Symbol und ein Abtastwert des Fehlersignals (UER) empfangen werden, der mit dem empfangenen Symbol oder dem empfangenen speziellen Symbol verknüpfte Kopplungskoeffizient ermittelt wird, der zu dem Ergebnis der bei der vorausgehenden Verarbeitung ausgeführten homologen Addition addiert (S1) wird, und, wenn das Aktualisieren der Kopplungskoeffizienten gestattet ist, der mit dem empfangenen verzögerten Symbol verknüpfte Kopplungskoeffizient aktualisiert wird, indem der vorherige Wert dieses Kopplungskoeffizienten zu dem Abtastwert des Fehlersignals (UER) addiert wird (S2).

5. Verfahren nach einem der vorstehenden Ansprüche, **dadurch gekennzeichnet, daß** zuerst das verzögerte Signal (SS1) vom Kopplungssignal (SGC1) befreit wird, dann das Ergebnissignal (SS3) vom Echoschätzungssignal (ECH) befreit wird.

6. Vorrichtung zum Senden/Empfangen eines Fernsprechsignals, die aufweist:
einen Sendekanal (VTX1) und einen Empfangskanal (VRX1), die mit einer Fernsprechteilnehmerleitung (LA1) verbunden sind, um Übertragungs- und Empfangssignale zu senden und zu empfangen, die Symbolflüsse aus digitalen Symbolen (SY) aufweisen, die aus S möglichen Übertragungssymbolen ausgewählt sind,
einen Speicher (MM), der auf dem Empfangskanal angeordnet ist und temporär p Symbole speichern kann,
einen Echoschätzungsblock (ANH1), der zwischen dem Empfangs- und dem Sendekanal angeordnet ist und ein adaptatives Filter mit endlicher Impulsantwort aufweist, das das Übertragungssignal sowie ein auf dem Empfangskanal ausgearbeitetes Fehlersignal (UER) empfängt, und
erste Subtraktionseinrichtungen (STC1), die einen mit dem Ausgang des Speichers verbundenen ersten Eingang und einen mit dem Ausgang des Echoschätzungsblocks verbundenen zweiten Eingang aufweisen,
**dadurch gekennzeichnet, daß** die Vorrichtung ferner einen Kopplungsschätzungsblock (BSC1) aufweist, mit:
adaptativen Filtereinrichtungen mit n Kopplungskoeffizienten, wobei n größer oder gleich p und kleiner oder gleich einem Achtel der Anzahl der Koeffizienten des Echoschätzungsfilters ist, und Schätzungseinrichtungen, welche ein erweitertes Übertragungssignal (SYA) empfangen, das auf dem Sendekanal einer benachbarten Sende/Empfangsvorrichtung (CU2) zeitlich synchron mit dem Übertragungssignal übertragen wird, und welche nacheinander die n Kopplungskoeffizienten als Funktion des erweiterten Sendesignals ermitteln können und sie nacheinander addieren (S1) können, um ein Kopplungssignal (SGC1) auszugeben, das eine geschätzte Kopplung zwischen dem besagten Empfangskanal (VRX1) und dem Sendekanal (VTX2) der benachbarten Vorrichtung (CU2) repräsentiert,
Verzögerungseinrichtungen (BSC,MER), die ein Übertragungssignal ausgeben können, das bezüglich des erweiterten Übertragungssignals um eine Verzögerung, die einen vordefinierten Wert (k) hat, der so gewählt ist, um die Konvergenz der Filtereinrichtungen sicherzustellen, zeitlich verzögert ist, und
Aktualisierungseinrichtungen, die ausgehend von dem zeitlich verzögerten Übertragungssignal und dem Fehlersignal die Kopplungskoeffizienten der Filtereinrichtungen aktualisieren können,
zweite Subtraktionseinrichtungen (STC2), die einen mit dem Ausgang des Speichers verbundenen ersten Eingang und einen mit dem Ausgang der Kopplungseinrichtungen verbundenen zweiten Eingang haben.

7. Vorrichtung nach Anspruch 6, **dadurch gekennzeichnet, daß** der Kopplungsschätzungsblock (BSC1) aufweist: einen Haupteingang (EP) zum Empfangen des Symbolflusses (SYA) des erweiterten Übertragungssignals, einen Hilfseingang (EX) zum Empfangen des Fehlersignals (UER), einen Ausgang (SP) zur Ausgabe des Kopplungsschätzungssignals,
dadurch, daß die Filtereinrichtungen, die Schätzungseinrichtungen und die Aktualisierungseinrichtungen auf n Verarbeitungsstufen (ET1-ET8) verteilt sind, die in einer Reihenschaltung zwischen dem Haupteingang und dem Ausgang angeordnet sind und alle mit dem Hilfseingang verbunden sind, und
dadurch, daß die Stufe des Rangs i aufweist:
einen ersten Symboleingang (SiE,SiA,SiM) zum Empfangen eines aktuellen Symbols des erweiterten Übertragungssignals,
einen zweiten Symboleingang (SiUM,SiUA) zum Empfangen eines bezüglich des aktuellen Symbols zeitlich verzögerten und von den Verzögerungseinrichtungen ausgegebenen Symbols,
einen Aktualisierungseingang (UER) zum Empfangen des Fehlersignals (UER),
einen Symbolausgang (SoE,SoA,SoM),
ein zwischen dem ersten Symboleingang und dem Symbolausgang angeordnetes Flipflop (BSC) zur temporären Speicherung des aktuellen Symbols,
einen sekundären Ausgang (SiGO),
S Register (R0-R3) zum Speichern von S Kopplungskoeffizienten (XC0-XC3),
erste Auswahleinrichtungen (MUX1), um als Funktion des Werts des am ersten Symboleingang anliegenden Symbols eines der Register auszuwählen und den entsprechenden Wert des Kopplungskoeffizienten auszugeben,
einen ersten Addierer (S1), um den so gewählten Kopplungskoeffizienten mit dem Ausgangssignal des ersten Addierers (S1) der Stufe des Rangs i-1 zu addieren und das Ergebnis der Addition an den sekundären Ausgang (SiGO) auszugeben,
zweite Auswahleinrichtungen (MUX2), um als Funktion des Werts des am zweiten Symboleingang anliegenden verzögerten Symbols eines der Register auszuwählen und den entsprechenden Wert des Kopplungskoeffizienten auszugeben,
einen zweiten Addierer (S2), um den von diesen zweiten Auswahleinrichtungen gewählten Kopplungskoeffizienten mit dem Fehlersignal (UER) zu addieren und das Ergebnis der Addition an das von den zweiten Auswahleinrichtungen ausgewählte Register auszugeben,
dadurch, daß der sekundäre Ausgang der letzten Stufe (ET8) mit dem zweiten Eingang der Subtraktionseinrichtungen (STC2) verbunden ist, während der erste Addierer (S1) der ersten Stufe (ET1) dem von den ersten Auswahleinrichtungen ausgewählten Kopplungskoeffizienten einen Wert Null hinzufügt, und
dadurch, daß der Kopplungsschätzungsblock (BSC1) Ablaufsteuerungseinrichtungen aufweist, um im Symbolübertragungstakt (CLK) die in dem Flipflop enthaltenen aufeinanderfolgenden Symbole an den Symbolausgang auszugeben und die ausgewählten aufeinanderfolgenden Kopplungskoeffizienten an die Addierer auszugeben.

8. Vorrichtung nach Anspruch 7, **dadurch gekennzeichnet, daß** die Verzögerungseinrichtungen Grundverzögerungseinrichtungen aufweisen, die zwischen den verschiedenen Verarbeitungsstufen verteilt sind, und dadurch, daß die Grundverzögerungseinrichtungen, die jeweils einer Verarbeitungsstufe, von der ersten bis zur vorletzten, zugeordnet sind, das Speicher-Flipflop (BSC) der Verarbeitungsstufe und k-1 andere in einer Reihenschaltung zwischen dem Ausgang des Speicher-Flipflops der betrachteten Stufe und dem zweiten Eingang dieser Stufe angeordnete Speicher-Flipflops aufweisen, wobei k unter Berücksichtigung des vordefinierten Werts der Verzögerung gewählt ist.

9. Vorrichtung nach Anspruch 7 oder 8, **dadurch gekennzeichnet, daß** der Kopplungsschätzungsblock Einrichtungen (MLB) zum Ausarbeiten eines speziellen Symbols, das eine Symbolabwesenheit im erweiterten Übertragungssignal repräsentiert, und Unterdrückungseinrichtungen (MH) aufweist, die mit dem Ausgang der Ausarbeitungseinrichtungen und dem Symbolausgang der letzten Verarbeitungsstufe verbunden sind und bei jeder Ausgabe eines speziellen Symbols durch die Ausarbeitungseinrichtungen und bis dieses spezielle Symbol an den Symbolausgang der letzten Verarbeitungsstufe ausgegeben worden ist, die Aktualisierung der Kopplungskoeffizienten unterdrücken können.

10. Vorrichtung nach einem der Ansprüche 6 bis 9, **dadurch gekennzeichnet, daß** die zweiten Subtraktionseinrichtungen (STC2) zwischen dem Speicher (MM) und den ersten Subtraktionseinrichtungen (STC1) angeordnet sind.

## Claims

1. Process for minimizing the disturbing effects of coupling between two neighbouring transmission/reception devices respectively connected to two subscriber telephone lines respectively conveying, in a temporally synchronous manner, streams of symbols chosen from among S possible transmission symbols, in which the digital signal received on the reception path (VRX1) of a first device (CU1) is delayed by a delay equal to p times the transmission period of the symbols, and this delayed signal is ridded of an echo signal (ECH) estimated on the basis of the signal (SY) transmitted over the transmission path (VTX1) of the first device, of at least one finite impulse response adaptive filter and of an error signal (UER), **characterized in that** a coupling signal (SGC1) relating to the transmission path (VTX2) of the second device (CU2) and the said reception path (VRX1) of the first device (CU1) is estimated on the basis of successive sums of n coefficients (XC0-XC3) of a coupling estimation adaptive filter which are determined on the basis of the signal (SYA) transmitted over the transmission path of the second device, n being greater than or equal to p and less than or equal to an eighth of the number of coefficients of the echo estimation filter (ANH1), **in that** the coefficients (XC0-XC3) of the coupling estimation filter are updated on the basis of the error signal (UER) and of a signal (SiUA, SiUM) temporally delayed with respect to the signal transmitted (SYA) over the transmission path of the second device by a delay (R) having a predefined value chosen so as to ensure the convergence of the estimation of the coupling signal and **in that** the delayed signal is also ridded of the said estimated coupling signal.

2. Process according to Claim 1, **characterized in that**, for a continuous stream of symbols (SYA) transmitted over the transmission path of the second device, the estimation of the coupling signal by adaptive filtering comprises
the determination, for each symbol (SYA) transmitted, of a coupling coefficient (XC0-XC3) by choosing, as a function of the value of the symbol transmitted, one of the coupling coefficients (XC0-XC3) of a coupling group associated with this symbol and composed of S coupling coefficients respectively associated with the S possible values of the transmission symbols,
the estimation of the said coupling signal (SGC1) by successive sums of n coupling coefficients respectively associated with n consecutive symbols of the said stream and respectively chosen from among n coupling groups,
and **in that** the updating of the coupling coefficients comprises the updating of the coupling group associated with the symbol of rank i by updating the value of the coupling coefficient of this group associated with the value of the symbol of rank i-k on the basis of the previous value of this symbol of rank i-k and of the value of the error signal, k being a predefined value chosen so as to ensure the convergence of the estimation of the coupling signal.

3. Process according to Claim 2, **characterized in that** in the absence of any symbol transmitted over the transmission path of the second device, a specific symbol (SE=1) representative of an absence of any transmitted symbol is derived and a zero coupling coefficient is assigned to this specific symbol, **in that** for a discontinuous stream of symbols transmitted by the second device, the coupling signal (SGC1) is estimated by successive sums of n coupling coefficients comprising the coupling coefficients respectively associated with the symbols of the said stream and respectively chosen from among the corresponding coupling groups, as well as the zero coupling coefficients corresponding to the absences of transmission, and **in that** updating of the n coupling groups is refrained from with each presence of a specific symbol and for a duration equal to n times the transmission period of the symbols.

4. Process according to Claim 3, **characterized in that** the coupling signal (SGC1) is estimated by calculating, at the transmission frequency of the symbols, coupling signal samples by n successive elementary processing operations performed in tempo with the transmission frequency of the symbols, and **in that** in each elementary processing operation, a symbol (SYA) of the stream of symbols transmitted by the second device or a specific symbol (SE=1), a symbol temporally delayed with respect to the said symbol or to the said specific symbol, and a sampled value of the error signal (UER) are received, the coupling coefficient associated with the symbol or with the specific symbol received is determined, **in that** it is summed (S1) with the result of the counterpart summation performed at the previous processing operation, and, when the updating of the coupling coefficients is permitted, the coupling coefficient associated with the delayed symbol received is updated by summing (S2) the previous value of this coupling coefficient with the sampled value of the error signal (UER).

5. Process according to one of the preceding claims, **characterized in that** the delayed signal (SS1) is firstly ridded of the coupling signal (SGC1) and then the resulting signal (SS3) is ridded of the estimated echo signal (ECH).

6. Device for transmitting/receiving a telephone signal, comprising a transmission path (VTX1) and a reception path (VRX1), which are connected to a subscriber telephone line (LA1), so as to transmit and receive transmission and reception signals comprising streams of digital symbols (SY) chosen from among S possible transmission symbols, a memory (MM) placed on the reception path and able temporarily to store p symbols, an echo estimation block (ANH1) connected between the transmission and reception path and comprising a finite impulse response adaptive filter receiving the transmission signal as well as an error signal (UER) derived on the reception path, and first subtraction means (STC1) possessing a first input linked to the output of the memory and a second input linked to the output of the echo estimation block, **characterized in that** it furthermore comprises a coupling estimation block (BSC1) comprising
adaptive filtering means with n coupling coefficients, n being greater than or equal to p and less than or equal to an eighth of the number of coefficients of the echo estimation filter, and estimation means receiving an ancillary transmission signal (SYA) transmitted over the transmission path of a neighbouring transmission/reception device (CU2), in a manner temporally synchronous with the said transmission signal, which are able successively to determine the n coupling coefficients as a function of the ancillary transmission signal and to sum them successively (S1) in such a way as to deliver a coupling signal (SGC1) representative of the estimated coupling between the said reception path (VRX1) and the transmission path (VTX2) of the neighbouring device (CU2),
delay means (BSC, MER) able to deliver a transmission signal temporally delayed with respect to the ancillary transmission signal by a delay having a predefined value (k) chosen so as to ensure the convergence of the filtering means,
and updating means able to update the coupling coefficients of the filtering means on the basis of the temporally delayed transmission signal and of the error signal,
second subtraction means (STC2) possessing a first input linked to the output of the memory and a second input linked to the output of the coupling means.

7. Device according to Claim 6, **characterized in that** the coupling estimation block (BSC1) comprises a main input (EP) for receiving the stream of symbols (SYA) of the ancillary transmission signal, an auxiliary input (EX) for receiving the error signal (UER), an output (SP) for delivering the estimated coupling signal, **in that** the filtering means, the estimation means and the updating means are distributed over n processing stages (ET1-ET8) connected in series between the said main input and the output and are all linked to the said auxiliary input, and **in that** the stage of rank i comprises a first symbol input (SiE, SiA, SiM) for receiving a current symbol of the ancillary transmission signal, a second symbol input (SiUM, SiUA) for receiving a symbol temporally delayed with respect to the current symbol and delivered by the delay means, an updating input (UER) for receiving the error signal (UER), a symbol output (SoE, SoA, SoM), a flip-flop (BSC) connected between the first symbol input and the symbol output for temporarily storing the current symbol, a secondary output (SiGO), S registers (R0-R3) for respectively storing S coupling coefficients (XC0-XC3), first selection means (MUX1) for selecting one of the registers on the basis of the value of the symbol present at the first symbol input and for delivering the corresponding value of the coupling coefficient, a first summer (S1) for summing the coupling coefficient thus selected with the output from the first summer (S1) of the stage of rank i-1 and for delivering the result of the summation to the said secondary output (SiGO), second selection means (MUX2) for selecting, on the basis of the value of the delayed symbol present at the second symbol input, one of the registers and for delivering the corresponding value of the coupling coefficient, a second summer (S2) for summing the coupling coefficient selected by these second selection means with the error signal (UER) and for delivering the result of the summation to the register selected by the second selection means,
**in that** the secondary output of the last stage (ET8) is linked to the second input of the subtraction means (STC2), while the first summer (S1) of the first stage (ET1) adds a zero value to the coupling coefficient selected by the first selection means,
and **in that** the coupling estimation block (BSC1) comprises sequencing means for, in tempo with the transmission frequency of the symbols (CLK), delivering to the symbol output the successive symbols contained in the said flip-flop, and for delivering the successive selected coupling coefficients to the summers.

8. Device according to Claim 7, **characterized in that** the delay means comprise elementary delay means distributed between the various processing stages, and **in that** the elementary delay means associated with each processing stage, from the first to the last but one, comprise the storage flip-flop (BSC) of the said processing stage and k-1 other storage flip-flops connected in series between the output of the storage flip-flop of the relevant stage and the second input of this stage, k being chosen having regard to the predefined value of the said delay.

9. Device according to Claim 7 or 8, **characterized in that** the coupling estimation block comprises means (MLB) for computing a specific symbol representative of an absence of symbol in the ancillary transmission signal, and the disabling means (MH), connected to the output of the computing means and the symbol output of the last processing stage, and capable of disabling.the updating of the coupling coefficients with each delivery of a specific signal by the computing means and until this specific symbol has been delivered to the symbol output of the last processing stage.

10. Device according to one of Claims 6 to 9, **characterized in that** the second subtraction means (STC2) are placed between the memory (MM) and the first subtraction means (STC1).
